# EUROPEAN PATENT SPECIFICATION

(11) **EP 0 782 600 B1**
(45) Date of publication and mention of the grant of the patent: **29.12.1999**
(21) Application number: 95934509.1
(22) Date of filing: 14.09.1995
(51) Int. Cl.: C08L 23/22, C08L 71/12

(54) **HIGH IMPACT POLYPHENYLENE ETHER COMPOSITIONS**
SCHLAGFESTE POLYPHENYLENETHERZUSAMMENSETZUNG
COMPOSITIONS DE POLYPHENYLENE ETHER A RESISTANCE ELEVEE AUX IMPACTS

(30) Priority: 14.09.1994 US 306047
(43) Date of publication of application: 09.07.1997
(73) Proprietor: EXXON CHEMICAL PATENTS INC., Baytown, TX 77520-2149 (US)
(72) Inventor: WANG, Hsien-Chang, Bellaire, TX 77401 (US); LI, Dongming, Fairport, NY 14450 (US)
(74) Representative: Dew, Melvyn John
(86) International application number: US9512137
(87) International publication number: WO9608534

(56) References cited:
- WO-A-92/02582
- WO-A-92/13035
- WO-A-94/03542

## Description

### BACKGROUND OF THE INVENTION

The invention relates to toughened polymer compositions based on a poly(phenylene ether) blended with an isomonoolefin/para-alkylstyrene copolymer.

Poly(phenylene ether) (PPE) resins are well known engineering thermoplastics possessing relatively high melt viscosities and softening points, e.g. in excess of about 275 °C. These polymers are useful in many applications where good mechanical properties and heat resistance are required. On the negative side, the PPE's generally suffer from poor impact resistance and poor processability. For example, the room temperature notched Izod impact strength of PPE's is generally below 1 ft.-lb./in. The intrinsic viscosity of a typical PPE is about 0.50, which is not suitable for processing by the usual injection molding technique.

U.S. Patent 3383435 teaches that the processing characteristics of PPE resins may be improved by forming blends of PPE and compatible styrene polymers, e.g. polystyrene or copolymers of styrene with acrylonitrile. Impact properties are also improved by using high impact polystyrene as a blend component. High impact polystyrene is a product which may be prepared by solution polymerization of styrene in the presence of a dissolved elastomer, e.g. cis-polybutadiene, such that the final product consists of a polystyrene matrix having from about 1-20% by weight of a discreet phase of polybutadiene particles dispersed therein.

Other polymer additives used to improve the impact and processing properties of PPE include hydrogenated styrene/butadiene/styrene block copolymers as disclosed for example by J.P. Kirk-patrick et al., "Elastomerics", October 30, 1988, p. 30-32.

A disadvantage of using a polybutadiene-containing impact modifier is that the polybutadiene segment tends to partially degrade at the high temperature required to process PPE, e.g. 290 °C or greater. The use of hydrogenated styrene/butadiene/styrene block copolymers as an impact modifier generally gives rise to a composition having substantially reduced modulus which is undesirable in many applications.

WO 92/02582 discloses compositions of an elastomeric halogen-containing copolymer of a C₄ to C₇ isomonoolefin and a para-alkylstyrene and a wide range of thermoplastic engineering polymers. The halogen-containing copolymer may contain up to 10 wt % of halogen. Although polyphenylene oxide is mentioned in the list of suitable engineering polymers, there is no further disclosure of compositions containing polyphenylene oxide.

### SUMMARY OF THE INVENTION

The present invention provides for thermoplastic polymer compositions having improved impact strength and reduced modulus loss. According to the present invention, there is provided a thermoplastic polymer composition comprising a blend of:
a) a poly(phenylene ether) polymer; and
b) a functionalized interpolymer of a C₄-C₇ isomonoolefin containing from 0.5 to 20 mole% of copolymerized para-alkylstyrene containing the following aromatic monomer units randomly spaced along the polymer chain: 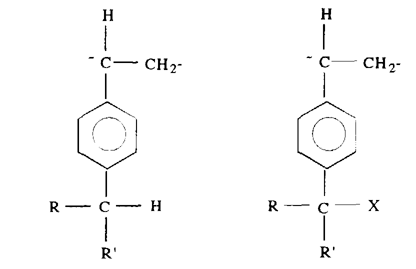 wherein R and R¹ are independently hydrogen or C₁ to C₄ alkyl, and X is a bromine group wherein the bromine containing units comprise from 0.5 to 60 mole% of the total content of said aromatic monomer units present in said interpolymer and wherein bromine is present in said interpolymer at a level of from 0.05 to 0.75 wt %.

Preferred blends contain from 1 to 100 parts by weight of the isomonoolefin interpolymer per 100 parts by weight of the PPE. The functionalized isomonoolefin interpolymer is a functionalized interpolymer prepared by replacing a portion of benzylic hydrogen with functional bromine groups. The composition may also contain one or more additional modifier polymers such as an olefin polymer, and/or styrene-based polymer.

The compositions may be melt blended and molded or extruded to form molded articles exhibiting improved impact, modulus and stiffness properties.

### DETAILED DESCRIPTION OF THE INVENTION

The functionalized C₄-C₇ isoolefin/para-alkylstyrene interpolymers used in the invention are random copolymers of a C₄ to C₇ isomonoolefin, such as isobutylene and a para-alkylstyrene comonomer, preferably para-methylstyrene containing at least 80%, more preferably at least 90% by weight of the para-isomer, wherein at least some of the alkyl substituent groups present in the styrene monomer units contain bromine. The materials may be characterized as isobutylene interpolymers containing the following monomer units randomly spaced along the polymer chain: 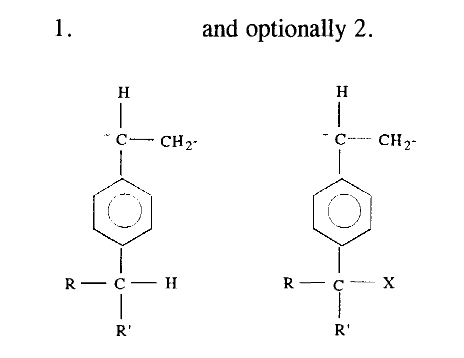 wherein R and R¹ are independently hydrogen, lower alkyl, preferably C₁ to C₇ alkyl and X is a functional bromine group. Preferably R and R¹ are each hydrogen. Up to 60 mole % of the para-alkylstyrene present in the interpolymer structure may be the functionalized structure (2) above.

Where monomer units 2 in the above formula are present, the isomonoolefin interpolymer is at least a terpolymer containing from 0.5 up to 60 mole % of functionalized monomer units 2 based on the content of aromatic monomer units 1 and 2. The functional group X is bromine incorporated by nucleophilic substitution of benzylic halogen. These functionalized isomonoolefin interpolymers and their method of preparation are more particularly disclosed in U.S. Patent 5,162,445.

Most useful of such functionalized materials are elastomeric random interpolymers of isobutylene and para-methylstyrene containing from 0.5 to 20 mole % para-methylstyrene wherein up to 60 mole % of the methyl substituent groups present on the benzyl ring contain a bromine atom. These polymers have a substantially homogeneous compositional distribution such that at least 95 % by weight of the polymer has a para-alkylstyrene content within 10% of the average para-alkylstyrene content of the polymer. More preferred polymers are also characterized by a narrow molecular weight distribution (Mw/Mn) of less than 5, more preferably less than 2.5, a preferred viscosity average molecular weight in the range of from 200,000 up to 2,000,000, and a preferred number average molecular weight in the range of from 25,000 to 750,000, as determined by Gel Permeation Chromotography.

The interpolymers may be prepared by slurry polymerization of the monomer mixture using a Lewis Acid catalyst, followed by bromination, in solution in the presence of bromine and a radical initiator such as heat and/or light and/or a chemical initiator.

The interpolymers are brominated interpolymers which contain from 0.05 to 0.75 mole % of bromomethyl groups, most of which is monobromomethyl, with less than 0.05 mole % dibromomethyl substituents present in the copolymer. More preferred interpolymers contain 0.05 to 0.75 wt % bromine, and are substantially free of ring halogen or halogen in the polymer backbone chain.

These interpolymers, their method of preparation, their method of cure and graft or functionalized polymers derived therefrom are more particularly disclosed in the above referenced U.S. Patent No. 5,162,445.

Poly(phenylene ether) (PPE) thermoplastic engineering resins which are modified in accordance with this invention are well known, commercially available materials produced by the oxidative coupling polymerization of alkyl substituted phenols. They are generally linear, amorphous polymers having a glass transition temperature in the range of 190 °C to 235 °C.

Preferred PPE materials comprise the structure: 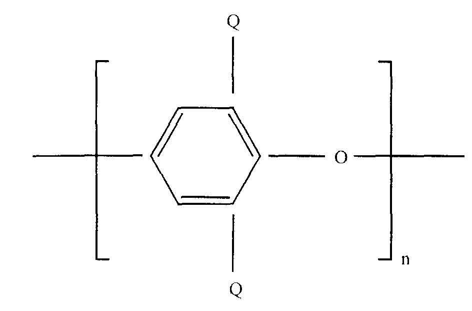 wherein Q is a monovalent substituent group selected from halogen, hydrocarbon having less than 8 carbon atoms, hydrocarbonoxy and halohydrocarbonoxy. More preferably, Q is the same or different alkyl group having from 1 to 4 carbon atoms and n is a whole integer of at least 100, preferably from 150 to 1200. Examples of preferred polymers are poly(2,6-dialkyl-1,4-phenylene ether) such as poly(2, 6-dimethyl-1, 4-phenylene ether), poly(2-methyl-6-ethyl-1, 4-phenylene ether), poly(2-methyl-6-propyl-1, 4-phenylene ether), poly-(2, 6-dipropyl-1, 4-phenylene ether) and poly (2-ethyl-6-propyl-1, 4-phenylene ether).

In order to achieve enhanced impact resistance and processing properties, the PPE and isomonoolefin interpolymer (I-PMS) are melt blended at a ratio in the range of from 1 to 100 parts by weight of I-PMS per 100 parts by weight of the PPE, more preferably from 5 to 50 parts by weight of I-PMS, and most preferably from 15-50 parts by weight I-PMS per 100 parts by weight PPE.

As stated above, blends containing PPE and the isomonoolefin interpolymer additive exhibit improved physical properties as compared with PPE without the added interpolymer It is believed that these enhanced properties are achieved as a result of a chemical interaction between benzylic bromine, present in the halogenated interpolymer and displacable hydrogen present in the PPE, probably an electrophilic substitution reaction, which occurs when the polymers are melt blended at temperature in the range of 280 to 310°C. This reaction may be further promoted by inclusion of a catalyst in the formulation which will promote the electrophilic substitution reaction, such as zinc oxide, magnesium oxide, zinc bromide and ferric chloride. These promoters may be added at a level in the range of from 0.01 to 1.5 wt. %, more preferably from 0.05 to 0.5 wt. %, based on the content of halogenated interpolymer present in the composition.

The I-PMS interpolymer has a saturated backbone structure which makes it very stable during melt blending, unlike prior art impact modifiers which contain unsaturated diolefin polymers, e.g. polybutadiene. Consequently, the blend components may be compounded using any suitable melt mixing device such as a Banbury Mixer, or, most preferably, in a mixer/extruder. Preferred melt mixing temperatures are in the range of from 270° to 320 °C, more preferably from 280° to 310 °C, for a period of mixing time sufficient to achieve a uniform dispersion of the I-PMS interpolymer within the PPE matrix, generally 0.5 to 4 minutes.

The melt processability of the composition may be further controlled by including a vinyl aromatic polymer or copolymer in the composition. Examples of such polymers are polystyrene and copolymers of styrene with less than 50 wt. % of acrylonitrile. A good balance between impact strength and processability can be achieved by varying the contents of vinyl aromatic polymer in the PPE/I-PMS blends. The level of addition of vinyl aromatic polymer may also range from 1 to 100 parts by weight per 100 parts by weight of PPE, more preferably from 5 to 60 parts by weight per 100 parts by weight PPE.

Since the I-PMS interpolymer is quite tacky even at room temperature, it may be desirable to first form a masterbatch composition of the I-PMS mixed with another polymer such as an olefin polymer, melt blend and extrude the mixture to form non-tacky pellets. Pelletizing facilitates the compounding. These pellets may then be melt blended with the PPE to form the compositions of this invention. Suitable olefin polymers include one or a mixture of crystallizable polymers such as polypropylene, high density polyethylene and ethylene/propylene copolymers as well as amorphous polymers such as low density polyethylene and copolymers of ethylene/propylene and up to 10 wt. % of a non-conjugated diene such as norbornadiene, 1, 4-hexadiene, dicyclopentadiene, and the like. Generally speaking, these masterbatch pre-blends may contain from 20 to 95 wt. % of the I-PMS copolymer and the balance one or a mixture of the olefin polymers. Tack may also be reduced by pre-dusting the I-PMS copolymer, e.g., a brominated I-PMS copolymer, with zinc oxide or other of the powdered reaction promoters described above.

The compositions of this invention may also include effective amounts of other ingredients normally included in PPE compositions including antioxidants, pigments, colorants, fillers, plasticizers and the like.

The following examples are illustrative of the invention. The material identified in the following description as Exxpro™ elastomer is a brominated interpolymer of isobutylene and para-methylstyrene (PMS) containing 4.7 wt. % PMS, 0.15 mol % of benzylically brominated PMS (measured by NMR), 0.35 wt. % bromine based on the weight of the polymer (measured by X-ray fluorescence) and the interpolymer has a viscosity average molecular weight of 350,000, measured as a dilute solution in diisobutylene at 20 °C. The material identified as XP-50 is a non-functionalized copolymer of isobutylene containing 5 wt% of PMS having a viscosity average molecular weight of 300,000, measured as a dilute solution in diisobutylene at 20°C. Other materials referred to below are commercially available as follows:

| Component | Manufacturer | Description |
|---|---|---|
| PPO®N640 | GE Plastics | Poly(2,6-dimethyl-1,4-phenylene ether) |
| PPO®4752 | GE Plastics | 70/30 blend of PPO®N640 and polystyrene |
| Kraton®-G 1650 | Shell | Hydrogenated styrene butadiene-styrene block copolymer |

Compositions of the examples were prepared by melt blending all components (including 0.5% by weight of an antioxidant) in a 0.8 inch (20 mm) Welding Engineers counter-rotating twin screw extruder fitted with two feeding zones and a strand die at the extruder exit. With respect to compositions containing zinc oxide, ground particles of the Exxpro™ polymer were predusted with zinc oxide powder prior to adding the material to the extruder mixer. The compositions were mixed and extruded over a product temperature profile of 250° to 320 °C. The extruded strands were cooled in a water bath before being pelletized into 5 x 5 mm pellets. The resulting pellets were dried to remove any surface moisture present.

Mechanical tests were obtained by molding the pellets into mechanical molding bars using a 15 ton Boy® injection molding machine. Tests were performed according to the following procedures.

| Test | Test Method |
|---|---|
| Tensile Strength | ASTM D-638 |
| Elongation | ASTM D-638 |
| Izod Impact strength ft-lb/in. | ASTM D-638 |
| Flexural Modulus | ASTM D-790 |

### EXAMPLE 1

A series of four different blends (A-D) having the composition shown in Table 1 were prepared as described above. Blend C (containing the Exxpro™ polymer) also contains 0.1 % by weight of zinc oxide powder based on the weight of the Exxpro™ polymer. Sample A is a control containing no added polymer modifiers and samples B-D contain 20 % by weight of the modifying polymers indicated in Table 1.

**Table 1.**

| Blends with PPE as the matrix. | | | | |
|---|---|---|---|---|
| | A | B | C | D |
| Components & Property | Matrix | Blends containing 20% modifier | | |
| PPE (wt%) (PPO®N 640) | 100 | 80 | 80 | 80 |
| XP-50 (wt%) | | 20 | | |
| Exxpro™(wt%) | | | 20 | |
| Kraton® G-1650 (wt%) | | | | 20 |
| Flexural modulus (kbar) | 26.2 | 17.5 | 18.9 | 14.5 |
| (kpsi) | 380 | 254 | 274 | 210 |
| Tensile strength (bar) | 7.58 | 262 | 352 | 2.16 |
| (kpsi) | 11.0 | 3.8 | 5.1 | 4.0 |
| Elongation at break (%) | 25.7 | 5.2 | 5.2 | 8.7 |
| Unnotched Izod* (J/m) | 895 | 1010 | 1390 | 1250 |
| (ft-lb/in) | 17.9 | 20.2 | 27.8 | 25 |
| Notched Izod* (J/m) | 30 | 280 | 460 | 425 |
| (ft-lb/in) | 0.6 | 5.6 | 9.2 | 8.5 |

| | | | | |
|---|---|---|---|---|
| * Room temperature, 3mm (1/8") specimens. | | | | |

Composition A shows the properties of PPE control (PPO® N640), which has a room temperature Izod impact strength of 30 J/m (0.6 ft-lb/in). Both the XP-50 and Exxpro™ modified PPE compositions exhibited improved Izod impact properties when compared to the control composition A. Exxpro ™ elastomer modified PPE (Composition C) has a notched Izod impact strength of 460 J/m (9.2 ft-lb/in), which is a further improvement over the XP-50 elastomer modified PPE (Composition B, 280 J/m (5.6 ft-lb/in)), demonstrating the importance of the benzyl bromide functional group. The PPE/Exxpro™ blend is also tougher than PPE/Kraton®6-1650 blend (Composition D, 425 J/m (8.5 ft-lb/in)). Furthermore, PPE/Exxpro™ blend has higher flexural modulus and tensile strength than both PPE/XP-50 and PPE/Kraton®G-1650 blends. Also, since the latter contains 33 wt.% polystyrene (PS) in block form while Exxpro™ elastomer contains no plastic segment, if Kraton®G-1650 and Exxpro™ elastomers were compared on a net rubber content basis, use of the former would likely lead to even lower stiffness and impact strength.

### EXAMPLE 2

Four additional blends were prepared as in Example 1 above except that the PPE material used was a pre-blend of PPE and polystyrene (PS). As in the case of blend C above, blend G also contains 0.1% by weight of zinc oxide, based on the weight of the Exxpro™ polymer. Formulations and test data are shown in Table 2.

**Table 2.**

| Blends with PPE/PS 70/30 blend as the matrix. | | | | |
|---|---|---|---|---|
| | E | F | G | H |
| Components & Property | Matrix Blends containing 20% modifier | | | |
| PPE/PS 70/30 (wt%)(PPO® N 4752) | 100 | 80 | 80 | 80 |
| XP-50 (wt%) | | 20 | | |
| Exxpro™(wt%) | | | 20 | |
| Kraton®G-1650(wt%) | | | | 20 |
| Flexural modulus (kbar) | 29.7 | 17.7 | 20.7 | 19.1 |
| (kpsi) | 431 | 256 | 300 | 277 |
| Tensile strength (bar) | 793 | 393 | 494 | 538 |
| (kpsi) | 11.5 | 5.7 | 7.2 | 7.8 |
| Elongation at break (%) | 17.5 | 6.1 | 7.5 | 17.8 |
| Unnotched Izod* (J/m) | 370 | 580 | 1025 | 1650 |
| (ft-lb/in) | 7.4 | 11.6 | 20.5 | 33 |
| Notched Izod* (J/m) | 25 | 70 | 135 | 150 |
| (ft-lb/in) | 0.5 | 1.4 | 2.7 | 3 |

| | | | | |
|---|---|---|---|---|
| * Room temperature, 3mm (1/8") specimens. | | | | |

Due to the added polystyrene, the resulting blends E-H all have lower Izod impact strength. Both the Exxpro™ and XP-50 modified PPE compositions exhibited improved impact properties compared with the control. Exxpro™ elastomer modified PPE (Composition G) has a notched Izod impact strength of 135 J/m (2.7 ft-lb/in), which is a further improvement over XP-50 elastomer modified PPE (Composition F, 70 J/m (1.4 ft-lb/in)), demonstrating again the importance of benzyl bromide functional group. PPE/Exxpro™ blend has a little lower notched Izod than PPE/Kraton®G-1650 blend (Composition H, 150 J/m, (3.0 ft-lb/in)). Again, PPE/Exxpro™ blend has higher flexural modulus and tensile strength than both PPE/XP-50 and PPE/Kraton®G-1650 blends.

### EXAMPLE 3

Four additional blends (I-L) were prepared containing varying amounts of the Exxpro™ elastomer. Composition and mechanical property data for these blends are compared with blends C and G as prepared above in Table 3. As in the case of the above Exxpro™ based blends, the compositions all contain 0.1 % by weight zinc oxide based on the weight of the Exxpro™ polymer.

Results show an enhancement in impact properties as the level of Exxpro TM elastomer is increased in the 10-20 % range.

**Table 3.**

| Blends containing different amounts of Exxpro™ elastomer. | | | | | | |
|---|---|---|---|---|---|---|
| | I | J | C | K | L | G |
| Components & Properties | | | | | | |
| PPE (wt.%) | 90 | 85 | 80 | | | |
| PPE/PS 70/30 (wt. %) | | | | 90 | 85 | 80 |
| Exxpro™(wt.%) | 10 | 15 | 20 | 10 | 15 | 20 |
| Flexural modulus (kbar) | 21.6 | 20.9 | 18.9 | 25.9 | 23.0 | 20.7 |
| (kpsi) | 313 | 303 | 274 | 375 | 333 | 300 |
| Tensile strength (kbar) | 455 | 379 | 352 | 669 | 579 | 496 |
| (kpsi) | 6.6 | 5.5 | 5.1 | 9.7 | 8.4 | 7.2 |
| Elongation at break (%) | 8.2. | 6.0 | 5.2 | 9.6 | 8.0 | 7.5 |
| Unnotched Izod* (J/m) | 745 | 975 | 1398 | 975 | 905 | 1025 |
| (ft-lb/in) | 14.9 | 19.5 | 27.8 | 19.5 | 18.1 | 20.5 |
| Notched Izod* (J/m) | 150 | 185 | 460 | 65 | 120 | 135 |
| (ft-lb/in) | 3 | 3.7 | 9.2 | 1.3 | 2.4 | 2.7 |

| | | | | | | |
|---|---|---|---|---|---|---|
| * Room temperature, 3mm (1/8") specimens. | | | | | | |

## Claims

1. A thermoplastic polymer composition comprising a blend of:
a) a poly(phenylene ether) polymer; and
b) a functionalized interpolymer of a C₄-C₇ isomonoolefin containing from 0.5 to 20 mole% of copolymerized para-alkylstyrene containing the following aromatic monomer units randomly spaced along the polymer chain: 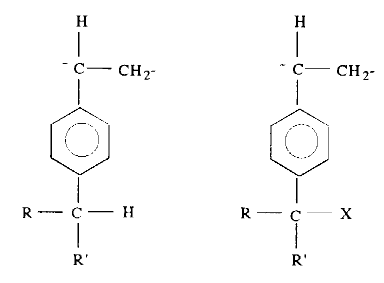 wherein R and R¹ are independently hydrogen or C₁ to C₄ alkyl, and X is a bromine group wherein the bromine containing units comprise from 0.5 to 60 mole% of the total content of said aromatic monomer units present in said interpolymer and wherein bromine is present in said interpolymer at a level of from 0.05 to 0.75 wt %.

2. The composition of claim 1 wherein said isomonoolefin is isobutylene and said para-alkylstyrene is para-methylstyrene.

3. The composition of either of claims 1 or 2 wherein said composition contains from 1 to 100 parts by weight of said interpolymer per 100 parts by weight of said poly(phenylene ether).

4. The composition of claim 3 wherein said composition contains from 5 to 60 parts by weight of said interpolymer per 100 parts by weight of said poly(phenylene ether).

5. The composition of any preceding claim wherein said polyphenylene ether comprises the structure: 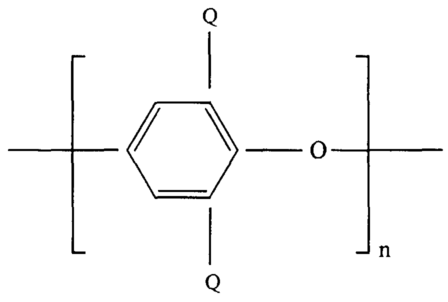 wherein Q is the same or different alkyl group having from 1 to 4 carbon atoms and n is a whole integer of at least 100.

6. The composition of claim 5 wherein said poly(phenylene ether) is poly(2, 6-dimethyl-1, 4-phenylene ether).

7. The composition of any preceding claim further containing from about 1 to about 100 parts by weight of a vinyl aromatic polymer per 100 parts by weight of said poly(phenylene ether).

8. The composition of claim 7 wherein said vinyl aromatic polymer is polystyrene.

9. The composition of any preceding claim further containing from 0.01 to 1.5 wt % of an electrophilic reaction promoter, based on the weight of said interpolymer present in the composition.

10. The composition of claim 9 wherein said reaction promoter is zinc oxide.

11. A process for producing a thermoplastic composition according to any preceding claim comprising forming a mixture of a poly(phenylene ether) and the functionalized interpolymer of a C₄-C₇ isomonoolefin containing 0.5 to 20 wt% of copolymerized para-alkylstyrene and melt mixing said mixture at a temperature in the range of from 270° to 320 °C until a uniform blend is obtained.

12. The process of claim 11 wherein said interpolymer is a brominated polymer of isobutylene and para-methylstyrene.

13. The process of claim 12 wherein said mixture further contains from 0.01 to 1.5 wt% of zinc oxide, based on the weight of said brominated interpolymer present in the composition.

14. A shaped article prepared from the composition of any of claims 1 to 10.

## Patentansprüche

1. Thermoplastische Polymerzusammensetzung, die ein Gemisch aus
a) Poly(phenylenether)polymer und
b) funktionalisiertem Interpolymer aus C₄- bis C₇-Isomonoolefin umfaßt, das 0,5 bis 20 Mol.% copolymerisiertes para-Alkylstyrol enthält, das die folgenden aromatischen Monomereinheiten statistisch verteilt entlang der Polymerkette enthält: 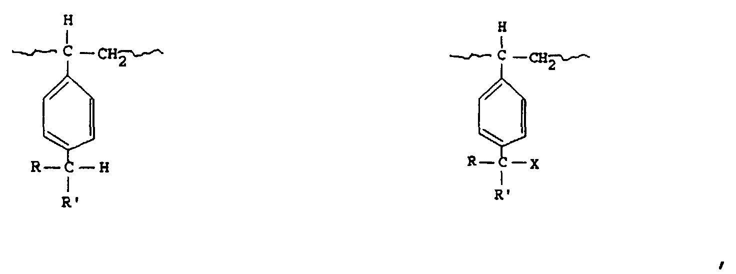 wobei R und R' unabhängig Wasserstoff oder C₁- bis C₄-Alkyl sind und X eine Bromgruppe ist, wobei die bromhaltigen Einheiten 0,5 bis 60 Mol.% des Gesamtgehalts der in dem Interpolymer vorhandenen aromatischen Monomereinheiten ausmachen und das Brom in dem Interpolymer in einer Menge von 0,05 bis 0,75 Gew.% vorhanden ist.

2. Zusammensetzung nach Anspruch 1, bei der das Isomonoolefin Isobutylen und das para-Alkylstyrol para-Methylstyrol ist.

3. Zusammensetzung nach Anspruch 1 oder 2, bei der die Zusammensetzung 1 bis 100 Gewichtsteile des Interpolymers je 100 Gewichtsteile des Poly(phenylenether)s enthält.

4. Zusammensetzung nach Anspruch 3, bei der die Zusammensetzung 5 bis 60 Gewichtsteile des Interpolymers je 100 Gewichtsteile des Poly(phenylenether)s enthält.

5. Zusammensetzung nach einem der vorhergehenden Ansprüche, bei der der Polyphenylenether die Struktur 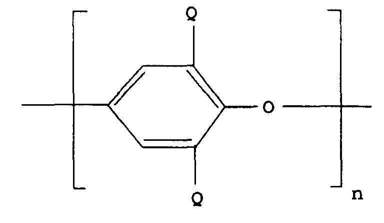 umfaßt, in der Q die gleiche oder eine unterschiedliche Alkylgruppe mit 1 bis 4 Kohlenstoffatomen ist und n eine ganze Zahl von mindestens 100 ist.

6. Zusammensetzung nach Anspruch 5, bei der der Poly(phenylenether) Poly(2,6-dimethyl-1,4-phenylenether) ist.

7. Zusammensetzung nach einem der vorhergehenden Ansprüche, die ferner etwa 1 bis etwa 100 Gewichtsteile vinylaromatisches Polymer je 100 Gewichtsteile Poly(phenylenether) enthält.

8. Zusammensetzung nach Anspruch 7, bei der das vinylaromatische Polymer Polystyrol ist.

9. Zusammensetzung nach einem der vorhergehenden Ansprüche, die ferner 0,01 bis 1,5 Gew.% elektrophilen Reaktionspromoter enthält, bezogen auf das Gewicht des in der Zusammensetzung vorhandenen Interpolymers.

10. Zusammensetzung nach Anspruch 9, bei der der Reaktionspromoter Zinkoxid ist.

11. Verfahren zur Herstellung einer thermoplastischen Zusammensetzung gemäß einem der vorhergehenden Ansprüche, bei dem eine Mischung aus Poly(phenylenether) und dem funktionalisierten Interpolymer aus C₄- bis C₇-Isomonoolefin gebildet wird, das 0,5 bis 20 Gew.% copolymerisiertes para-Alkylstyrol enthält, und die Mischung bei einer Temperatur im Bereich von 270° bis 320°C schmelzgemischt wird, bis ein gleichförmiges Gemisch erhalten wird.

12. Verfahren nach Anspruch 11, bei dem das Interpolymer ein bromiertes Polymer aus Isobutylen und para-Methylstyrol ist.

13. Verfahren nach Anspruch 12, bei dem die Mischung ferner 0,01 bis 1,5 Gew.% Zinkoxid enthält, bezogen auf das Gewicht des in der Zusammensetzung vorhandenen bromierten Interpolymers.

14. Geformter Gegenstand, der aus der Zusammensetzung gemäß einem der Ansprüche 1 bis 10 hergestellt ist.

## Revendications

1. Composition polymérique thermoplastique constituée d'un mélange :
a) d'un polymère consistant en un poly(éther de phénylène) ; et
b) d'un interpolymère fonctionnalisé d'une isomono-oléfine en C₄ à C₇ contenant 0,5 à environ 20 % en moles d'un para-alkylstyrène copolymérisé contenant les motifs monomériques aromatiques suivants espacés de manière aléatoire le long de la chaîne du polymère : 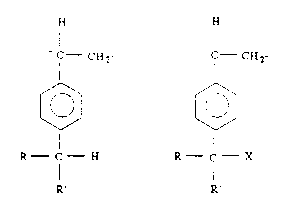 dans laquelle R et R¹ représentent indépendamment l'hydrogène ou un groupe alkyle en C₁ à C₄ et X représente un groupe bromo, les motifs contenant du brome représentant 0,5 à 60 % en moles de la quantité totale desdits motifs monomériques aromatiques présents dans ledit interpolymère, et le brome étant présent dans ledit interpolymère en une teneur de 0,05 à 0,75 % en poids.

2. Composition suivant la revendication 1, dans laquelle l'isomono-oléfine est l'isobutylène et le para-alkylstyrène est le paraméthylstyrène.

3. Composition suivant l'une des revendications 1 et 2, qui contient 1 à 100 parties en poids de l'interpolymère pour 100 parties en poids du poly(éther de phénylène).

4. Composition suivant la revendication 3, qui contient 5 à 60 parties en poids de l'interpolymère pour 100 parties en poids du poly(éther de phénylène).

5. Composition suivant l'une quelconque des revendication précédentes, dans laquelle le poly(éther de phénylène) comprend la structure : 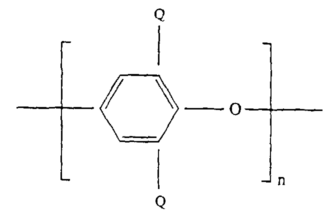 dans laquelle Q représente des groupes alkyle, identiques ou différents, ayant 1 à 4 atomes de carbone et n représente un nombre entier d'au moins 100.

6. Composition suivant la revendication 5, dans laquelle le poly(éther de phénylène) consiste en poly(éther de 2,6-diméthyl-1,4-phénylène).

7. Composition suivant l'une quelconque des revendications précédentes, contenant en outre environ 1 à environ 100 parties en poids d'un polymère aromatique vinylique pour 100 parties en poids du poly(éther de phénylène).

8. Composition suivant la revendication 7, dans laquelle le polymère aromatique vinylique consiste en polystyrène.

9. Composition suivant l'une quelconque des revendications précédentes, contenant en outre 0,01 à 1,5 % en poids d'un activateur réactionnel électrophile, sur la base du poids de l'interpolymère présent dans la composition.

10. Composition suivant la revendication 9, dans laquelle l'activateur réactionnel consiste en oxyde de zinc.

11. Procédé pour produire une composition thermoplastique suivant l'une quelconque des revendications précédentes, comprenant les étapes consistant à former un mélange d'un poly(éther de phénylène) et de l'interpolymère fonctionnalisé d'une isomono-oléfine en C₄ à C₇ contenant 0,5 à 20 % en poids d'un para-alkylstyrène copolymérisé, et à mélanger en masse fondue ledit mélange à une température comprise dans l'intervalle de 270° à 320°C jusqu'à obtention d'un mélange d'une formulation uniforme.

12. Procédé suivant la revendication 11, dans lequel l'interpolymère est un polymère bromé d'isobutylène et de para-méthylstyrène.

13. Procédé suivant la revendication 12, dans lequel le mélange contient en outre 0,01 à 1,5 % d'oxyde de zinc, sur la base du poids de l'interpolymère bromé présent dans la composition.

14. Article façonné préparé à partir de la composition suivant l'une quelconque des revendications 1 à 10.
